# EUROPEAN PATENT SPECIFICATION

(11) **EP 2 082 002 B1**
(45) Date of publication and mention of the grant of the patent: **11.04.2012**
(21) Application number: 07839376.6
(22) Date of filing: 09.10.2007
(51) Int. Cl.: C09D 193/04, C08L 93/04

(54) **LOW-VOC ADDITIVES FOR EXTENDING WET EDGE AND OPEN TIMES OF COATINGS**
ZUSÄTZE MIT NIEDRIGEM VOC ZUR AUSWEITUNG NASSER KANTEN UND OFFENER ZEITEN VON BESCHICHTUNGEN
ADDITIFS À FAIBLE TENEUR EN COV POUR RALLONGER LES DURÉES LIMITES DE REPRISE ET LES DÉLAIS DE COLLAGE DES REVÊTEMENTS

(30) Priority: 19.10.2006 US 583570
(43) Date of publication of application: 29.07.2009
(73) Proprietor: EASTMAN CHEMICAL COMPANY, Kingsport TN 37660 (US)
(72) Inventor: STOCKL, Rebecca Reid, Kingsport, TN 37660-4504 (US); MCCREIGHT, Kevin Wayne, Kingsport, TN 37660 (US); KUO, Thauming, Kingsport, TN 37664 (US)
(74) Representative: Ricker, Mathias
(86) International application number: PCT/US2007/021555
(87) International publication number: WO 2008/048438

(56) References cited:
- EP-A- 0 317 906
- WO-A-98/27162
- GB-A- 2 266 533

## Description

### BACKGROUND OF THE INVENTION

### 1. Field of the Invention

The present invention relates generally to the use of low volatile organic compound (VOC) additives in coatings. In another aspect, the invention relates to coating additives having less than about 20 weight percent VOCs comprising a water-dispersible rosin and a water-dispersible polymer having a glass transition temperature (Tg) of at least about 20°C, where the additives are operable to improve the drying characteristics of a coating.

### 2. Description of the Prior Art

In general, a need exists when applying a decorative or protective coating to a substrate to be able to repair irregularities in the still-wet coating after a period of time has elapsed. For example, such repair can be achieved by re-brushing over a previously coated substrate, either over the main area of the coating or on the edge of the coating. In addition, it is desirable for a coating to exhibit relatively short tack-free times when applied to a substrate. For many years, solvent-based coatings have typically been employed for most conceivable applications. In solvent based coatings, organic solvents are employed to modify the drying characteristics of the coating composition to achieve the above-mentioned needs. For example, organic solvent-based alkyds having an open time of between 30 and 45 minutes are readily available. However, solvent-based coatings tend to have a relatively high VOC content. Thus, due to increased restrictions on VOCs in coatings, many in the industry have begun employing aqueous coatings for a variety of applications.

Aqueous coatings, however, typically provide less than adequate open and wet edge time to repair irregularities in a still-wet coating after being applied to a substrate, in addition to increased tack-free times. Aqueous coatings generally employ dispersed high molecular weight polymers as the binder material in the coating. The use of such polymers results in short wet edge times when the coating composition is dried because the dispersed polymer particles tend to coalesce in the edge region of an applied coating relatively soon after the coating has been applied. As a continuous film is formed, the viscosity of the coating increases rapidly, due to the high molecular weight of the polymers comprising the coatings, which leads to limited wet edge and open times.

In order to alleviate these shortcomings, additives are typically combined with the aqueous coating to improve the drying characteristics. It is common practice in the industry to incorporate small molecule alkylene glycols, such as ethylene or propylene glycol, to achieve longer wet edge or open time. However, the addition of these small molecule glycols contribute to the overall VOC content of the coating composition. As regulations increase that limit the allowable amount of VOC content in coatings, the amount of alkylene glycols must often be reduced, which leads to reduced wet edge and open times, along with increased tack-free time. Accordingly, there is a need for additives that can prolong wet edge and open times without contributing to the VOC content of the coating and without compromising other coating performance properties.

### SUMMARY OF THE INVENTION

The invention relates to a coating comprising: water; a binder; and an additive, wherein said additive comprises (a) a water-dispersible rosin and (b) a water-dispersible polymer having a Tg in the range of from 20 to 160 °C, wherein said additive has a VOC content of less than 20 weight percent as determined in accordance with Environmental Protection Agency Reference Method 24, which is equivalent to ASTM D3960,
wherein said water-dispersible rosin is a salt of a rosin acid; and wherein said water-dispersible polymer comprises a neutralized vinyl polymer and/or a sulfopolymer.

### DETAILED DESCRIPTION

In accordance with one embodiment of the present invention, a low volatile organic compound (VOC) content additive is provided that generally comprises a water-dispersible rosin, a water-dispersible polymer, and optionally an amphiphilic component. The additive can be employed in a coating so as to improve the coating's properties, such as, for example, wet edge time, block resistance, gloss, scrub resistance, and yellowing, when being applied to a substrate and upon drying.

The water-dispersible rosin can be any rosin that readily forms an aqueous dispersion upon addition to water. In one embodiment, the water-dispersible rosin can be a salt formed from the neutralization of a rosin acid with a base. The rosin acid can be any rosin acid known in the industry, including naturally occurring and/or synthetic rosin acids.

In one embodiment of the present invention, the additive can comprise at least about 1 weight percent of the water-dispersible rosin based on the total weight of the solids in the additive. Additionally, the additive can comprise water-dispersible rosin in the range of from about 2 to about 98 weight percent, in the range of from about 10 to about 90 weight percent, or in the range of from 20 to 75 weight percent based on the total weight of the solids in the additive.

The rosin acid can be derived from any of the three sources of naturally occurring rosins: gum rosin, wood rosin and tall oil rosin. Gum rosin can be obtained from the oleoresin of a living pine tree, and wood rosin can be harvested from the heartwood of an aged stump of a felled pine tree. Tall oil rosin can be obtained by distillation of crude tall oil (CTO), a by-product of the kraft sulphate pulping process. CTO can typically contain 70-90 percent acidic material, while rosins derived from oleoresin and aged stump wood can typically comprise approximately 90 percent rosin acids. Additionally, the rosin acid can be derived directly from a natural source or can be chemically treated, such as by hydrogenation, dehydrogenation, or polymerization to produce a modified rosin acid.

Rosin acids are monocarboxylic acids having the typical molecular formula C₁₉H₂₉COOH. In one embodiment of the present invention, the rosin acid can be abietic acid, levopimaric acid, neoabietic acid, palustric acid, dehydroabietic acid, tetrahydroabietic acid, pimaric acid, isopimaric acid, Δ-isopimaric acid, elliotinoic acid, and/or sandaracopimaric acid. The two major rosin acid components can be abietic acid, having the following structural formula: 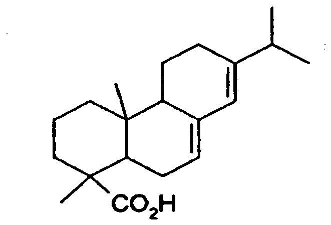 and dehydroabietic acid, having the following structural formula:

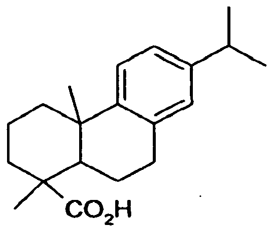

Typically, a rosin acid will have a specific acid number due to the presence of the carboxylic acid moiety on the rosin acid molecule. The acid number of a rosin acid can be expressed as the number of milligrams of potassium hydroxide required to neutralize one gram of sample, as determined by ASTM method D-465. In one embodiment of the present invention, the rosin acid can have an acid number of at least about 80 mg KOH/g. Further, the rosin acid can have an acid number in the range of from about 100 to about 200 mg KOH/g, or in the range of from 150 to 175 mg KOH/g.

Suitable examples of commercially available rosin acids include, but are not limited to, FORAL AX-E (hydrogenated gum rosin; acid number (AN) 165), STAYBELITE Resin-E (partially hydrogenated gum rosin; AN 162), PAMITE 79 (tall oil rosin; AN 164), PAMITE 79-1 (tall oil rosin; AN 158), PAMITE 90 (tall oil rosin; AN 175), POLY-PALE (partially dimerized rosin; AN 142), DYMEREX (dimerized rosin; AN 140), POLYSTIX 90 (partially dimerized rosin; AN 150), DRESINATE (rosin soap), and PERMALYN NC-11 (noncrystalline rosin; AN 157), all of which are available from Eastman Chemical Company.

As mentioned above, the rosin acid can be neutralized with a base to form a salt. The bases that are useful in the present invention can be divided into two classes. The first class of bases can comprise an alkali metal base or alkaline earth metal base, which in aqueous solution can neutralize the acidic moiety in a rosin acid. Such basic compositions include bases derived from alkali metals and alkaline earth metals such as, for example, sodium, potassium, magnesium, calcium, and other basic metal compounds. Suitable bases from this first class of bases useful in the present invention include, but are not limited to, sodium oxide, potassium oxide, magnesium oxide, calcium oxide, sodium hydroxide, potassium hydroxide, magnesium hydroxide, calcium hydroxide, sodium carbonate, potassium carbonate, sodium bicarbonate, potassium bicarbonate, calcium carbonate, magnesium bicarbonate, alkali metal borate compounds and their hydrates, sodium phosphate, potassium biphosphate, and sodium pyrophosphate.

In one embodiment, neutralization of the rosin acid with this first class of bases can form a metal salt of the rosin acid. Such metal salts include, but are not limited to, a sodium salt of a rosin acid, a potassium salt of a rosin acid, a magnesium salt of a rosin acid, and a calcium salt of a rosin acid.

The second class of bases can comprise volatile nitrogen bases. Such bases can include basically reacting compounds that can be volatilized through the action of heat or upon exposure to ambient atmosphere, and can include nitrogen compounds. Suitable bases from this second class of bases useful in the present invention include, but are not limited to, ammonia, ammonium hydroxide, methylamine, dimethylamine, trimethylamine, ethylamine, diethylamine, triethylamine, ethanolamine, dimethylethanolamine, diethanolamine, triethanolamine, and morpholine. Neutralization of the rosin acid with this second class of bases can form, for example, an ammonium salt of the rosin acid.

As mentioned above, in one embodiment of the present invention, the additive can also comprise a water-dispersible polymer. The water-dispersible polymer can be any polymer that readily forms an aqueous dispersion upon addition to water. In one embodiment, the water-dispersible polymer can have a glass transition temperature (Tg) of at least about 20°C.

In one embodiment of the present invention, the additive can comprise at least about 1 weight percent of the water-dispersible polymer based on the total weight of the solids in the additive. Additionally, the additive can comprise water-dispersible polymer in the range of from about 2 to about 98 weight percent, in the range of from about 5 to about 80 weight percent, or in the range of from 20 to 75 weight percent based on the total weight of the solids in the additive.

In one embodiment of the present invention, the water-dispersible polymer can be a vinyl polymer that has been subjected to neutralization with a base. Prior to neutralization, the vinyl polymer can be formed of ethylenically unsaturated monomers, at least one of which can comprise a carboxylic acid end group and/or an anhydride end group, such that the vinyl polymer can comprise monomer residues having at least one carboxylic acid end group and/or at least one anhydride end group. Suitable carboxylic acid and/or anhydride containing monomers include, but are not limited to, acrylic acid, methacrylic acid, itaconic acid, crotonic acid, and maleic anhydride.

In one embodiment of the present invention, the vinyl polymer, prior to neutralization, can be a copolymer, formed of the above mentioned carboxylic acid and/or anhydride containing monomers, and one or more ethylenically unsaturated monomers. Such ethylenically unsaturated monomers include, but are not limited to, methyl acrylate, methyl methacrylate, ethyl acrylate, ethyl methacrylate, butyl acrylate, butyl methacrylate, isobutyl acrylate, isobutyl methacrylate, ethylhexyl acrylate, 2-ethylhexyl methacrylate, 2-ethylhexyl acrylate, isoprene, octyl acrylate, octyl methacrylate, iso-octyl acrylate, iso-octyl methacrylate, trimethyolpropyl triacrylate, styrene, α-methyl styrene, vinyl naphthalene, vinyl toluene, chloromethyl styrene, glycidyl methacrylate, carbodiimide methacrylate, C₁-C₁₈ alkyl crotonates, di-n-butyl maleate, α- or β-vinyl naphthalene, di-octylmaleate, allyl methacrylate, di-allyl maleate, di-allylmalonate, methyoxybutenyl methacrylate, isobornyl methacrylate, hydroxybutenyl methacrylate, hydroxyethyl(meth)acrylate, hydroxypropyl(meth)acrylate, acetoacetoxy ethyl methacrylate, acetoacetoxy ethyl acrylate, acrylonitrile, vinyl chloride, vinylidene chloride, vinyl acetate, vinyl ethylene carbonate, epoxy butene, 3,4-dihydroxybutene, hydroxyethyl(meth)acrylate, methacrylamide, acrylamide, butyl acrylamide, ethyl acrylamide, diacetoneacrylamide, butadiene, vinyl ester monomers, vinyl(meth)acrylates, isopropenyl(meth)acrylate, cycloaliphaticepoxy(meth)acrylates, ethylformamide, 4-vinyl-1,3-dioxolan-2-one, 2,2-dimethy-1,4-vinyl-1,3-dioxolane, 3,4-di-acetoxy-1-butene, monovinyl adipate, t-butylaminoethyl methacrylate, dimethylaminoethyl methacrylate, diethylaminoethyl methacrylate, N,N-dimethylaminopropyl methacrylamide, 2-t-butylaminoethyl methacrylate, N,N-dimethylaminoethyl acrylate, N-(2-methacryloyloxy-ethyl)ethylene urea, and methacrylamido-ethylethylene urea. Further monomers are described in The Brandon Associates, 2nd edition, 1992 Merrimack, N.H., and in Polymers and Monomers, the 1996-1997 Catalog from Polyscience, Inc., Warrington, Pa.

The vinyl polymer can be prepared by any method known in the art for chain polymerization. Such polymerization techniques include, but are not limited to, bulk polymerization, solution polymerization or emulsion polymerization. In one embodiment, the general technique described in U.S. Patent No. 6,262,149, for emulsion polymerization may be employed to form the vinyl polymer.

In one embodiment, the vinyl polymer, prior to neutralization can have an acid number of at least about 80 mg KOH/g, in the range of from about 100 to about 500 mg KOH/g, in the range of from about 150 to about 300 mg KOH/g, or in the range of from 180 to 250 mg KOH/g. Furthermore, the vinyl polymer can have a Tg of at least about 40°C, or in the range of from about 60 to about 130°C, or in the range of from 70 to 110°C.

Suitable examples of commercially available vinyl polymers include, but are not limited to, JONCRYL 67, JONCRYL 678, JONCRYL ECO 694 (all available from BASF), MOREZ 101 (available from Rohm and Haas), CARBOSET GA-1166 or GA-2299 (available from Noveon), EASTACRYL Emulsion 30D (available from Eastman Chemical Co.), and VANCRYL 65 or 68 (available from Cytec Surface Specialties).

As mentioned above, the vinyl polymer of the present invention can be neutralized with a base to form a water-dispersible vinyl polymer. As with the rosin acid mentioned above, the bases that can be used in the present invention to neutralize the vinyl polymer can be divided into two classes. The first class of bases can comprise an alkali metal base or alkaline earth metal base, which in aqueous solution can neutralize the carboxylic acid and/or anhydride end groups on the vinyl polymer. Such basic compositions include bases derived from alkali metals and alkaline earth metals such as, for example, sodium, potassium, magnesium, calcium, and other basic metal compounds. Suitable bases from this first class of bases useful in the present invention include, but are not limited to, sodium oxide, potassium oxide, magnesium oxide, calcium oxide, sodium hydroxide, potassium hydroxide, magnesium hydroxide, calcium hydroxide, sodium carbonate, potassium carbonate, sodium bicarbonate, potassium bicarbonate, calcium carbonate, magnesium bicarbonate, alkali metal borate compounds and their hydrates, sodium phosphate, potassium biphosphate, and sodium pyrophosphate. Neutralization of the vinyl polymer with this first class of bases can form a metal salt of the vinyl polymer.

The second class of bases can comprise volatile nitrogen bases. Such bases can include basically reacting compounds that can be volatilized through the action of heat or upon exposure to ambient atmosphere, and can include nitrogen compounds. Suitable bases from this second class of bases useful in the present invention include, but are not limited to, ammonia, ammonium hydroxide, methylamine, dimethylamine, trimethylamine, ethylamine, diethylamine, triethylamine, ethanolamine, dimethylethanolamine, diethanolamine, triethanolamine, and morpholine. Neutralization of the vinyl polymer with this second class of bases can form, for example, an ammonium salt of the vinyl polymer.

In another embodiment of the present invention, the water-dispersible polymer can be a sulfopolymer. The sulfopolymer can be any polymer comprising at least one monomer residue having a sulfonate moiety. In one embodiment, the sulfopolymer can comprise a sulfopolyester, a sulfopolyamide, or a sulfopolyesteramide. In another embodiment of the present invention, the sulfopolymer can comprise the residues of one or more of a glycol monomer, a dicarboxylic acid monomer, a diamine monomer, and/or a sulfomonomer.

In one embodiment, the sulfopolymer can be formed of one or more glycol monomers such as, for example, aliphatic, alicyclic, and/or aralkyl glycols. Examples of such glycol monomers include, but are not limited to, diethylene glycol, ethylene glycol, propylene glycol, 1,3-propanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-trimethyl-1,6-hexanediol, thiodiethanol, 1,2-cyclohexanedimethanol, 1,3-cyclohexanedimethanol, 1,4-cyclohexanedimethanol, 2,2,4,4-tetramethyl-1,3-cyclobutanediol, p-xylylenediol. Furthermore, the sulfopolymer may be a copolymer prepared from two or more of the above glycols.

The sulfopolymer can be formed of one or more dicarboxylic acid monomers such as, for example, aliphatic dicarboxylic acids, alicyclic dicarboxylic acids, and/or aromatic dicarboxylic acids. Examples of such dicarboxylic acid monomers include, but are not limited to, succinic acid, glutaric acid, adipic acid, azelaic acid, sebacic acid, fumaric acid, maleic acid, itaconic acid, 1,4-cyclohexanedicarboxylic acid, phthalic acid, terephthalic acid, and isophthalic acid.

The sulfopolymer can be formed of one or more diamine monomers. Examples of such diamine monomers include, but are not limited to, ethylenediamine, hexamethylenediamine, 2,2,4-trimethylhexamethylenediamine, 4-oxaheptane-1,7-diamine, 4,7-dioxadecane-1,10-diamine, 1,4-cyclohexanebismethylamine, 1,3-cyclohexanebismethylamine, heptamethylenediamine, and/or dodecamethylenediamine.

In one embodiment, the sulfopolymer can comprise the residue of a sulfomonomer. The sulfomonomer can be a difunctional component, wherein a metal sulfonate group is attached to an aromatic acid nucleus such as benzene, naphthalene, diphenyl, oxydiphenyl, sulfonyldiphenyl or methylenediphenyl nucleus. Examples of such difunctional sulfomonomers include, but are not limited to, sulfophthalic acid, sulfoterephthalic acid, sulfoisophthalic acid, 4-sulfonaphthalene-2,7-dicarboxylic acid, esters of 4-sulfonaphthalene-2,7-dicarboxylic acid, and/or metallosulfoaryl sulfonate. Furthermore, the difunctional sulfomonomer can be a dicarboxylic acid or an ester thereof containing a metal sulfonate group, a glycol containing a metal sulfonate group, or a hydroxy acid containing a metal sulfonate group. The metal ion of the metal sulfonate group may be Na⁺, K⁺, Li⁺, and the like. Additionally, the difunctional sulfomonomer can comprise 5-sodiosulfoisophathalic acid.

Additional monomers and polymerization techniques that can be used to form the sulfopolymer are described in U.S. Patent Nos. 3,734,874, 3,779,993, and 4,335,220.

In one embodiment of the present invention, the sulfopolymer can be a linear polymer having a number average molecular weight of at least about 5,000. Additionally, the sulfopolymer can have a Tg of at least about 25°C. Furthermore, the sulfopolymer can have a Tg in the range of from about 30 to about 60°C, or in the range of from 35 to 55°C.

Suitable examples of commercially available sulfopolymers include, but are not limited to, EASTMAN AQ-29, AQ-38, AQ-48, and AQ 55 polymers, all available from Eastman Chemical Company.

As mentioned above, the additive can optionally comprise an amphiphilic component. The amphiphilic component can comprise any component that displays both hydrophilic and hydrophobic properties. In one embodiment of the present invention, the additive can comprise in the range of from about 2 to about 98 weight percent, in the range of from about 5 to about 80 weight percent, or in the range of from 5 to 60 weight percent of the amphiphilic component based on the total weight of the solids in the additive. As used herein, when the amphiphilic component is present, it will be deemed to contribute to the total weight of the solids in either the additive or any coating composition, regardless of the actual physical state of the amphiphilic component. For example, if the amphiphilic component is a liquid surfactant, its non-volatile components will be considered "solids" for purposes of defining the weight percents of various components of the additive.

In one embodiment of the present invention, the amphiphilic component can be a surfactant. The surfactant can be ionic or non-ionic. Additionally, the surfactant can be amphoteric. In one embodiment, the surfactant can have a hydrophilic-lipophilic balance (HLB) value of at least about 3. Additionally, the surfactant can have an HLB value in the range of from about 6 to about 16. HLB values given herein are based on a scale from 0 to 20, as determined by Griffin's Method. Examples of surfactants that can be used include, but are not limited to, an alkali or ammonium salt of alkylsulfate, alkylsulfonic acid, or fatty acid; oxyethylated alkylphenol; ethoxylated alkyl amine, and mixtures thereof. A list of suitable surfactants is available in the treatise McCutcheon's Emulsifiers & Detergents, North American Edition and International Edition, MC Publishing Co., Glen Rock, N.J., 1993. Examples of suitable commercially available surfactants include, but are not limited to, ethoxylated tallow alkyl amine (polyoxyethylene tallow amine) available from Clariant Corp. as GENAMIN T 150M or from ICI Americas as MILSTAT N-20, and ethoxylated coco alkyl amine (polyoxyethylene coco amine) available from Akzo Nobel as ETHOMEEN C/25.

In another embodiment of the present invention, the amphiphilic component can be an amphiphilic polyester. Additionally, the amphiphilic polyester can be a liquid sulfopolyester. The liquid sulfopolyester can be any polyester comprising at least one monomer residue having a metal sulfonate group. In one embodiment, the liquid sulfopolyester can comprise the residues of one or more of a glycol monomer; a polyol monomer; a dicarboxylic acid containing monomer or an anhydride containing monomer; one or more of a monobasic fatty acid, a monobasic fatty ester, a naturally occurring oil, or a partially-saponified oil; and/or one or more of a sulfomonomer or a sulfomonomer adduct containing at least one metal sulfonate group.

In one embodiment, the liquid sulfopolyester can be formed of one or more glycol monomers such as, for example, aliphatic, alicyclic, and aryl alkyl glycol monomers. Suitable examples of glycol monomers include, but are not limited to, ethylene glycol, polyethylene glycol, propylene glycol, diethylene glycol, triethylene glycol, tetraethylene glycol, pentaethylene glycol, hexaethylene glycol, heptaethylene glycol, octaethylene glycol, nonaethylene glycol, decaethylene glycol, 1,3-propanediol, 2,4-dimethyl-2-ethyl-hexane-1,3-diol, 2,2-dimethyl-1,3-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-tetramethyl-1,6-hexanediol, 1,2-cyclohexanedimethanol, 1,3-cyclohexanedimethanol, 1,4-cyclohexanedimethanol, 2,2,4-trimethyl-1,3-pentanediol, 2,2,4-tetramethyl-1,3-cyclobutanediol, p-xylenediol, hydroxypivalyl hydroxypivalate, 1,10-decanediol, hydrogenated bisphenol A, and the like.

In another embodiment, the liquid sulfopolyester can be formed of one or more polyol monomer. Suitable examples of polyol monomers include, but are not limited to, trimethylolpropane, pentaerythritol, trimethylolethane, erythritol, threitol, dipentaerythritol, sorbitol, xylitol, and the like.

In another embodiment, the liquid sulfopolyester can be formed of one or more dicarboxylic acid containing monomers or anhydride containing monomers. The dicarboxylic acid containing monomers or anhydride containing monomers can be, for example, isophthalic acid, phthalic anhydride or acid, terephthalic acid, adipic acid, tetrachlorophthalic anhydride, dodecanedioic acid, sebacic acid, azelaic acid, 1,4-cyclohexanedicarboxylic acid, 1,3-cyclohexanedicarboxylic acid, hexahydrophthalic anhydride, tetrahydrophthalic anhydride, maleic anhydride, fumaric acid, succinic anhydride, succinic acid, 2,6-naphthalenedicarboxylic acid, glutaric acid, and the like.

The monobasic fatty acid or fatty ester, or the naturally occurring, partially-saponified oil that can be used can be prepared by reacting a fatty acid or oil with a polyol. Examples of suitable oils include, but are not limited to, sunflower oil, canola oil, dehydrated castor oil, coconut oil, corn oil, cottonseed oil, fish oil, linseed oil, oiticica oil, soya oil, tung oil, animal grease, castor oil, lard, palm kernel oil, peanut oil, perilla oil, safflower oil, tallow oil, walnut oil, and the like. Suitable examples of fatty acids alone or as components of oil include, but are not limited to, coconut oil fatty acid, C-810L fatty acid (hexanoic, octanoic, and dodecanoic acid blend available from Procter & Gamble Chemicals), C-101 or C-103 fatty acid (hydrogenated fatty acids available from Procter & Gamble Chemicals), tallow acid, soya acid, myristic acid, linseed acid, crotonic acid, versatic acid, coconut acid, tall oil fatty acid, rosin acid, neodecanoic acid, neopentanoic acid, isostearic acid, 12-hydroxystearic acid, cottonseed acid, and the like.

The sulfomonomer can be a difunctional or a monofunctional monomer containing a -SO₃M (metal sulfonate) group attached to an aromatic nucleus. The sulfomonomer as a difunctional monomer component may be a dicarboxylic acid (or a derivative thereof) containing a -SO₃M. In one embodiment, M can be hydrogen or a metal ion such as, for example, Na⁺, Li⁺, K⁺, Ca²⁺, Cu²⁺. Suitable examples of the aromatic nucleus to which -SO₃M group may be attached include, but are not limited to, benzene, naphthalene, anthracene, diphenyl, oxydiphenyl, sulfonyl-diphenyl, and methylenediphenyl.

In one embodiment of the present invention, sulfomonomers can include, but are not limited to, 5-sodiosulfoisophthalic acid, dimethyl 5-sodiosulfoisophthalate, lithium 5-sulfoisophthalic acid, dimethyl lithium 5-sulfoisophthalate, potassium 5-sulfoisophthalic acid, dimethyl potassium 5-sulfoisophthalate, 3-sodiosulfobenzoic acid, and the like.

In one embodiment, the liquid sulfopolyester may be formed from a sulfomonomer adduct. A sulfomonomer adduct can be prepared by reacting a difunctional sulfomonomer, as described above, with a glycol such as, for example, neopentyl glycol.

In one embodiment of the present invention, the liquid sulfopolyester can be prepared by charging a glycol monomer; a polyol monomer; a dicarboxylic acid containing monomer or anhydride containing monomer; one or more of a monobasic fatty acid, a monobasic fatty ester, a naturally occurring oil, or a partially-saponified oil; and one or more of a sulfomonomer or a sulfomonomer adduct containing at least one metal sulfonate group along with a catalyst to a reactor and allowed to react at a temperature in the range of from about 160°C to about 250°C until a desired acid number is obtained according to ASTM Method D1639.

In one embodiment of the present invention, the liquid sulfopolyester can be a hydroxyl functionalized polyester having a hydroxyl number in the range of from about 40 to about 200. Also, the liquid sulfopolyester can have an acid number of less than about 20 mg KOH/g, or in the range of from about 0 to about 15 mg KOH/g. Additionally, the liquid sulfopolyester can have a number average molecular weight in the range of from about 700 to about 3,000. Furthermore, the liquid sulfopolyester can have a Tg of less than about 20°C.

As mentioned above, the additive of the present invention can comprise a water-dispersible rosin, a water-dispersible polymer, and optionally an amphiphilic component. In one embodiment, the water-dispersible rosin can be prepared by neutralizing a rosin acid with a base and water in a container. The container holding the resulting mixture can then be rolled for a period of time. In one embodiment, the container can be rolled for at least 10 hours, or in the range of from about 12 to about 48 hours. In another embodiment, the water-dispersible rosin can be prepared by charging a rosin acid, a base, and water to a reactor. The components can be subsequently mixed by any means known in the art, including, but not limited to, mechanical stirring. The mixing can be performed at ambient or elevated temperature.

In one embodiment, the amount of rosin acid in the above resulting mixture can be at least about 10 weight percent based on the total weight of the mixture. Additionally, the amount of rosin acid can be in the range of from about 15 to about 35 weight percent, or in the range of from 20 to 30 weight percent based on the total weight of the mixture. The base can be present in the resulting mixture in any amount that can sufficiently neutralize the rosin acid to lower the acid number of the rosin acid by at least about 40 percent, at least about 60 percent, or at least 80 percent. The amount of water in the resulting mixture can be at least about 50 weight percent based on the total weight of the mixture. Additionally, the amount of water can be in the range of from about 55 to about 80 weight percent, or in the range of from 60 to 70 weight percent based on the total weight of the mixture.

In one embodiment, the total amount of solids in the resulting mixture can be at least about 5 weight percent based on the total weight of the mixture. Additionally, the total amount of solids in the resulting mixture can be in the range of from about 5 to about 50 weight percent, in the range of from about 15 to about 40 weight percent, or in the range of from 20 to 30 weight percent based on the total weight of the mixture. Additionally, the weight ratio of rosin acid to water can be at least about 4:3, in the range of from about 1:1 to about 1:5, or in the range of from 1:2 to 1:3.

As mentioned above, the water-dispersible polymer can be a neutralized vinyl polymer. In one embodiment, the neutralized vinyl polymer can be prepared by neutralizing a vinyl polymer with a base and water in a container. The container holding the resulting mixture can then be rolled for a period of time. In one embodiment, the container can be rolled for at least 10 hours, in the range of from about 12 hours to about 48 hours. In another embodiment, the neutralized vinyl polymer can be prepared by charging a vinyl polymer, a base, and water to a reactor. The components can be subsequently mixed by any means known in the art, including, but not limited to, mechanical stirring. The mixing can be performed at ambient or elevated temperature.

In one embodiment, the amount of vinyl polymer in the resulting mixture can be at least about 10 weight percent, in the range of from about 15 to about 35 weight percent, or in the range of from 20 to 30 weight percent based on the total weight of the mixture. The base can be present in the resulting mixture in any amount that can sufficiently neutralize the rosin acid to lower the acid number of the rosin acid by at least about 40 percent, at least about 60 percent, or at least 80 percent. The amount of water in the resulting mixture can be at least about 50 weight percent, in the range of from about 55 to about 80 weight percent, or in the range of from 60 to 70 weight percent based on the total weight of the mixture. The total amount of solids in the resulting mixture can be at least about 5 weight percent, in the range of from about 5 to about 50 weight percent, in the range of from about I 5 to about 40 weight percent, or in the range of from about 20 to 30 weight percent based on the total weight of the mixture. Additionally, the weight ratio of vinyl polymer to water can be at least about 4:3, or in the range of from about 1:1 to about 1:6, or in the range of from 1:2 to 1:4.

As mentioned above, the water-dispersible polymer can be a sulfopolymer. In one embodiment, the sulfopolymer can be prepared by adding a solid water-dispersible sulfopolymer to water while continuously stirring. The resulting mixture can then be covered and heated over a period of time. In one embodiment, the temperature to which the resulting mixture is heated to can be at least about 50°C, in the range of from about 60 to about 100°C, or in the range of from 70 to 90°C. The time over which the resulting mixture can be heated can be at least about 10 minutes, in the range of from about 15 minutes to about 1 hour, or in the range of from 20 to 40 minutes. In one embodiment, at least a portion of the weight of water lost during heating can be replaced upon cooling.

In the above described procedure, the amount of the solid water-dispersible sulfopolymer can be at least about 10 weight percent based on the total weight of the mixture. Additionally, the amount of the solid water-dispersible sulfopolymer can be in the range of from about 15 to about 50 weight percent, or in the range of from 25 to 40 weight percent based on the total weight of the mixture.

As mentioned above, the optional amphiphilic component of the additive can be a liquid sulfopolyester. In one embodiment, the liquid sulfopolyester can be prepared by first preparing a glycol/sulfomonomer adduct by mixing a glycol, a sulfomonomer, an acid catalyst, and water in a container. This first mixture can be allowed to react in the container until a desired acid number is obtained and then collecting the distillate. In one embodiment, the reaction is allowed to occur at a temperature of at least about 90°C, in the range of from about 100 to about 250°C, or in the range of from 140 to 190°C.

The first mixture can comprise glycol in an amount of at least about 30 weight percent, in the range of from about 35 to about 65 weight percent, or in the range of from 45 to 55 weight percent based on the total weight of the first mixture. The first mixture can comprise sulfomonomer in an amount of at least about 15 weight percent, in the range of from about 20 to about 45 weight percent, or in the range of from 30 to 40 weight percent based on the total weight of the first mixture. Additionally, the first mixture can comprise acid catalyst in an amount of at least about 1 x 10⁻⁶ weight percent, in the range of from about 1 x 10⁻⁵ to about 1 x 10⁻³ weight percent, or in the range of from 3 x 10⁻⁴ to 9 x 10⁻⁴ weight percent based on the total weight of the first mixture. The first mixture can comprise water in an amount of at least about 1 weight percent, in the range of from about 2 to about 10 weight percent, or in the range of from 4 to 8 weight percent based on the total weight of the first mixture.

The reaction can be allowed to continue until the adduct has an acid number of less than about 15 mg KOH/g, in the range of from about 0 to about 10 mg KOH/g, or in the range of from 2 to 5 mg KOH/g. Water can then be added to the resulting adduct such that the adduct comprises solids in an amount of at least about 50 weight percent, in the range of from about 70 to about 99 weight percent, or in the range of from 85 to 95 weight percent.

A second mixture comprising a polyol, a glycol, the glycol/sulfomonomer adduct, a dicarboxylic acid and/or an anhydride, a fatty acid, and an acid catalyst can then be prepared. The temperature of this second mixture can be gradually raised over a period of time while collecting the resultant distillate. In one embodiment, the temperature can be raised to a first elevated temperature of at least about 100°C, in the range of from about 150 to about 250°C, or in the range of from 180 to 200°C. Also, the period of time over which the temperature can be increased can be at least about 10 minutes, in the range of from about 20 to about 40 minutes, or in the range of from 25 to 35 minutes. In one embodiment, the reactants can be allowed to react at this first elevated temperature for a period of time of at least about 15 minutes, in the range of from about 30 minutes to about 3 hours, or in the range of from 45 to 75 minutes.

In one embodiment, the temperature of the reactants can then be raised to a second elevated temperature. The second elevated temperature can be at least about 10°C greater than the first elevated temperature, in the range of from about 15 to about 60°C greater, or in the range of from 20 to 40°C. greater. The reaction can be allowed to continue at this second elevated temperature for a period of time of at least about 1 hour, in the range of from about 2 to about 4 hours, or in the range of from 2.5 to 3.5 hours. The reactants can then be allowed to cool to a temperature sufficient to isolate the resultant polyester. In one embodiment, the reactants can be allowed to cool to a temperature of less than about 100°C, or in the range of from 50 to 90°C.

The above described second mixture can comprise polyol in an amount of at least about 3 weight percent, in the range of from about 4 to about 12 weight percent, or in the range of from 6 to 10 weight percent based on the total weight of the second mixture. The second mixture can also comprise glycol in an amount of at least about 10 weight percent, in the range of from about 15 to about 50 weight percent, or in the range of from 25 to 35 weight percent based on the total weight of the second mixture. The second mixture can additionally comprise the glycol/sulfomonomer adduct in an amount of at least about 4 weight percent, in the range of from about 8 to about 16 weight percent, or in the range of from 10 to 14 weight percent based on the total weight of the second mixture. Further, the second mixture can comprise dicarboxylic acid and/or anhydride in an amount of at least about 10 weight percent, in the range of from about 15 to about 50 weight percent, or in the range of from 25 to 35 weight percent based on the total weight of the second mixture. Additionally, the second mixture can comprise fatty acid in an amount of at least about 5 weight percent, in the range of from about 11 to about 21 weight percent, or in the range of from 15 to 19 weight percent based on the total weight of the second mixture. Furthermore, the second mixture can comprise acid catalyst in an amount of at least about 0.01 weight percent, in the range of from about 0.03 to about 0.18 weight percent, or in the range of from 0.05 to 0.15 weight percent based on the total weight of the second mixture.

In one embodiment of the present invention, the glycol, polyol, dicarboxylic acid, anhydride, fatty acid, and sulfomonomer of the above described procedure can respectively comprise any of the components as described above for the optional liquid sulfopolyester portion of the additive. Furthermore, the acid catalyst of the above described procedure can comprise any acid operable to initiate a polymerization reaction. In one embodiment, the acid catalyst can be any acid operable to initiate an esterification reaction. An example of a suitable acid catalyst is butylstannoic acid, available from Arkema Inc. under the tradename FASCAT 4100.

In one embodiment of the present invention, the additive can be prepared by blending together the water-dispersible rosin, the water-dispersible polymer, optionally the amphiphilic component, and any other desirable components. The blending can be accomplished by any known method in the art. In one embodiment, the blending can result in an additive comprising at least about 10 weight percent of solids, in the range of from about 15 to about 75 weight percent solids, or in the range of from 20 to 50 weight percent solids, based on the total weight of the additive.

As mentioned above, the additive can have a low VOC content. In one embodiment of the invention, the additive can have a VOC content of less than about 20 weight percent, less than about 15 weight percent, or less than 10 weight percent based on the total weight of the additive. Additionally, when the additive is employed in a coating to form a coating composition, the coating composition can also have a low VOC content. The coating composition can have a VOC content of less than about 150 g/l, less than about 100 g/l, or less than 50 g/l.

As used herein, VOC content is determined in accordance with Environmental Protection Agency (EPA) Reference Method 24, which is equivalent to ASTM D3960. Under this method, the total amount of volatiles is first determined, then the amount of water and exempt solvents is determined and subtracted from the total amount of volatiles to determine the amount of VOC.

As mentioned above, in one embodiment of the present invention the additive can be combined with a coating to form a modified coating composition. Coatings suitable for use can be any water-based coating known in the industry, including, but not limited to, latex coatings. In one embodiment of the present invention, the coating composition can comprise water, binder, pigment, and additive.

In one embodiment of the present invention, the coating composition can comprise an amount of water in the range of from about 20 to about 90 weight percent. Additionally, the coating composition can collectively comprise binder and additive in an amount in the range of from about 10 to about 80 weight percent.

The binder can be any binder known in the industry that binds pigment together and to a substrate. Examples of binders include, but are not limited to, wax, casein, egg tempera, gum arabic, linseed oil, shellac, starch glue, gelatin, dextrin, polyester, alkyd, epoxy, acrylic, polyurethane, and latex emulsion. In one embodiment, the solids of the binder can comprise at least about 5 weight percent of the total weight of the coating composition. Additionally, the solids of the binder can comprise in the range of from about 10 to about 60 weight percent, or in the range of from 20 to 40 weight percent of the total weight of the coating composition.

The pigment can be any pigment known in the industry, including natural, synthetic, organic, or inorganic pigments. Examples of suitable commercially available pigments include, but are not limited to, FLEXIVERSE aqueous dispersion pigments, available from SunChemical, and TI-PURE pigments, available from DuPont. In one embodiment of the present invention, the coating composition can comprise pigment in an amount of at least about 10 weight percent based on the total weight of the coating composition. Additionally, the coating composition can comprise pigment in an amount in the range of from about 15 to about 45 weight percent, or in the range of from 25 to 35 weight percent based on the total weight of the coating composition.

In one embodiment of the present invention, the coating composition can comprise an aqueous coating and an additive, where the coating comprises in the range of from about 70 to about 97 weight percent of a film-forming latex polymer and in the range of from about 3 to about 30 weight percent of the additive based on the total weight of the solids in said latex polymer and said additive. In one embodiment, the latex polymer can be any polymer formed from at least one ethylenically unsaturated monomer. Furthermore, the latex polymer can have a Tg in the range of from about -5 to about 80°C.

In one embodiment of the present invention, the coating can optionally comprise a coalescing agent. Such coalescing agent can be any additive that when employed in a coating evaporates in such a way as to form a uniform film. An example of a commercially available coalescing agent is TEXANOL, an ester-alcohol available from Eastman Chemical Company. In one embodiment, when a coalescing agent is employed in the coating composition, the additive can comprise water-dispersible polymer in an amount of at least about 50 weight percent, in the range of from about 55 to about 95 weight percent, or in the range of from 60 to 88 weight percent based on the total weight of the solids in the additive. Additionally, when the optional coalescing agent is employed, the additive can comprise amphiphilic component in an amount in the range of from about 1 to about 20 weight percent, or in the range of from 2 to 10 weight percent based on the total weight of the solids in the additive.

Other coalescing agents include, but are not limited to, ethanol, n-propanol, isopropanol, n-butanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, 2,2,4-trimethyl-1,3-pentanediol mono-isobutyrate, 2,2,4-trimethyl-1,3-pentanediol di-isobutyrate, 2-ethylhexyl benzoate, benzyl alcohol, ethylene glycol mono-octyl ether, diacetone alcohol, and the like. Such coalescing agents may also include coalescing agents such as diallyl phthalate, SANTOLINK XI-100 (polyglycidyl allyl ether from Monsanto), and others as described in U.S. Pat. Nos. 5,349,026 and 5,371,148.

A coating composition of the invention may further contain additional coating additives. Examples of such coating additives include, but are not limited to, one or more leveling, rheology, and flow control agents such as silicones, fluorocarbons or cellulosics; extenders; plasticizers; flatting agents; pigment wetting and dispersing agents and surfactants; ultraviolet light (UV) absorbers; hindered amine light stabilizers (HALS); phosphites, tinting pigments; colorants; defoaming and antifoaming agents; anti-settling, anti-sag and bodying agents; anti-skinning agents; anti-flooding and anti-floating agents; biocides, fungicides and mildewcides; corrosion inhibitors; or thickening agents. Specific examples of such additives can be found in Raw Materials Index, published by the National Paint & Coatings Association, 1500 Rhode Island Avenue, N.W., Washington, D.C. 20005. Further examples of such additives may be found in U.S. Pat. No. 5,371,148.

Examples of flatting agents include, but are not limited to, synthetic silica, available from the Davison Chemical Division of W. R. Grace & Company under the SYLOID tradename; polypropylene, available from Hercules Inc. under the HERCOFLAT tradename; and synthetic silicate, available from J. M. Huber Corporation under the ZEOLEX tradename.

Examples of dispersing agents and surfactants include, but are not limited to, sodium bis(tridecyl)sulfosuccinnate, sodium di(2-ethylhexyl) sulfosuccinnate, sodium dihexylsulfosuccinnate, sodium dicyclohexylsulfosuccinnate, sodium diamylsulfosuccinnate, sodium diisobutylsulfosuccinnate, disodium iso-decylsulfosuccinnate, the disodium ethoxylated alcohol half ester of sulfosuccinnic acid, disodium alkylamidopolyethoxy sulfosuccinnate, tetra-sodium N-(1,2-dicarboxyethyl)-N-octadecyl sulfosuccinnamate, disodium N-octasulfosuccinnamate, sulfated ethoxylated nonylphenol, 2-amino-2-methyl-1-propanol, and the like.

Examples of viscosity, suspension, and flow control agents include, but are not limited to, polyaminoamide phosphate, high molecular weight carboxylic acid salts of polyamine amides, and alkylene amine salts of an unsaturated fatty acid, all available from BYK Chemie U.S.A. under the ANTI TERRA tradename. Further examples include polysiloxane copolymers, polyacrylate solution, cellulose esters, hydroxyethyl cellulose, hydrophobically-modified hydroxyethyl cellulose, hydroxypropyl cellulose, polyamide wax, polyolefin wax, carboxymethyl cellulose, ammonium polyacrylate, sodium polyacrylate, hydroxypropyl methyl cellulose, ethyl hydroxyethyl cellulose, polyethylene oxide, guar gum and the like. Other examples of thickeners include the methylene/ethylene oxide associative thickeners and water-soluble carboxylated thickeners such as, for example, UCAR POLYPHOBE by Union Carbide.

Several proprietary antifoaming agents are commercially available and include, for example, BUBREAK of Buckman Laboratories Inc., BYK (of BYK Chemie, U.S.A.), FOAMASTER and NOPCO of Henkel Corp., DREWPLUS of the Drew Industrial Division of Ashland Chemical Company, TRYSOL and TROYKYD of Troy Chemical Corporation, and SAG of Union Carbide Corporation.

Examples of fungicides, mildewcides, and biocides include, but are not limited to, 4,4-dimethyloxazolidine, 3,4,4-trimethyloxazolidine, modified barium metaborate, potassium N-hydroxy-methyl-N-methyldithiocarbamate, 2-(thiocyano-methylthio)benzothiazole, potassium dimethyl dithiocarbamate, adamantane, N-(ttichloromethylthio)phthalimide, 2,4,5,6-tetrachloro-isophthalonitrile, orthophenyl phenol, 2,4,5-trichlorophenol, dehydroacetic acid, copper naphthenate, copper octoate, organic arsenic, tributyl tin oxide, zinc naphthenate, and copper 8-quinolinate.

Examples of UV absorbers are single compounds or mixtures of compounds that absorb light in the range of 250-400 nm with a minimal absorbance between 400 and 700 nm. Examples of UV absorbers include, but are not limited to, triazines, cyanoacrylates, benzotriazoles, naphthalenes, benzophenones, and benzoxazin-4-ones. Commercially available UV absorbers include, but are not limited to, CYASORB UV-9 (Cytec Industries, CAS# 131-57-7), CYASORB UV-24 (Cytec Industries, CAS# 131-53-3), CYASORB UV-531 (Cytec Industries, CAS# 1843-05-6), CYASORB UV-2337 (Cytec Industries, CAS# 25973-55-1), CYASORB UV-5411 (Cytec Industries, cAS# 3147-75-9), CYASORB UV-5365 (Cytec Industries, CAS# 2440-22-4), CYASORB UV-1164 (Cytec Industries, CAS# 2725-22-6), CYASORB UV-3638 (Cytec Industries, CAS# 18600-59-4), TINUVIN 213 (Ciba Specialty Chemicals, CAS# 104810-47-1), TINUVIN 234 (Ciba Specialty Chemicals, CAS# 70321-86-7), TINUVIN 320 (Ciba Specialty Chemicals, CAS# 3846-71-7), TINUVIN 326 (Ciba Specialty Chemicals, CAS# 3896-11-5), TINUVIN 327 (Ciba Specialty Chemicals, CAS# 3864-99-1), TINUVIN 328 (Ciba Specialty Chemicals, CAS# 25973-55-1), TINUVIN 329 (Ciba Specialty Chemicals, CAS# 3147-75-9), TINUVIN 350 (Ciba Specialty Chemicals, CAS# 36437-37-3), TINWIN 360 (Ciba Specialty Chemicals, CAS# 103597-45-1), TINUVIN 571 (Ciba Specialty Chemicals, CAS# 23328-53-2) and TINUVIN 1577 (Ciba Specialty Chemicals, CAS# 147315-50-2). Additional suitable UV absorbers are listed in the Plastic Additives Handbook 5th Edition, Hanser Gardner Publications, Inc., Cincinnati, OH, 2001. Identical molecules sold under different trade names are also covered by this invention. Additionally, combinations of UV absorbers can be used.

Examples of hindered amine light stabilizers (HALS) that may be suitable include, but are not limited to, CYASORB UV-3346 (Cytec Industries, CAS# 90751-07-8), CYASORB UV-3529 (Cytec Industries, CAS# 193098-40-7), - CYASORB UV-3641 (Cytec Industries, CAS# 106917-30-0), CYASORB UV-3581 (Cytec Industries, CAS# 79720-19-7), CYASORB UV-3853 (Cytec Industries, CAS# 167078-06-0), CYASORB UV-3853S (Cytec Industries, CAS# 24860-22-8), TINUVIN 622 (Ciba Specialty Chemicals, CAS# 65447-77-0), TINUVIN 770 (Ciba Specialty Chemicals, CAS# 52829-07-9), TINUVIN 144 (Ciba Specialty Chemicals, CAS# 63843-89-0), TINUVIN 123 (Ciba Specialty Chemicals, CAS# 129757-67-1), CHIMASSORB 944 (Ciba Specialty Chemicals, CAS# 71878-19-8), CHIMASSORB 119 (Ciba Specialty Chemicals, CAS#. 106990-43-6), CHIMASSORB 2020 (Ciba Specialty Chemicals, CAS# 192268-64-7), LOWILITE 76 (Great Lakes Chemical Corp., CAS# 41556-26-7), LOWILITE 62 (Great Lakes Chemical Corp., CAS# 65447-77-0), LOWILITE 94 (Great Lakes Chemical Corp., CAS# 71878-19-8), UVASIL 299LM (Great Lakes Chemical Corp., CAS# 182635-99-0), UVASIL 299HM (Great Lakes Chemical Corp., CAS# 182635-99-0), Dastib 1082 (Vocht a.s., CAS# 131290-28-3), UVINUL 4049H (BASF Corp., CAS# 109423-00-9), UVINUL 4050H (BASF Corp., CAS# 124172-53-8), UVINUL 5050H (BASF Corp., CAS# 199237-39-3), MARK LA 57 (Asahi Denka Co., Ltd., CAS# 64022-61-3), MARK LA 52 (Asahi Denka Co., Ltd., CAS# 91788-83-9), MARK LA 62 (Asahi Denka Co., Ltd., CAS# 107119-91-5), MARK LA 67 (Asahi Denka Co., Ltd., CAS# 100631-43-4), MARK LA 63 (Asahi Denka Co., Ltd. Co., Ltd. Co., CAS# 115055-30-6), MARK LA 68 (Asahi Denka Co., Ltd., CAS# 100631-44-5), HOSTAVIN N 20 (Clariant Corp., CAS# 95078-42-5), HOSTAVIN N 24 (Clariant Corp., CAS# 85099-51-1, CAS# 85099-50-9), HOSTAVIN N 30 (Clariant Corp., CAS# 78276-66-1), DIACETAM-5 (GTPZAB Gigiena Truda, USSR, CAS# 76505-58-3), UVASORB-HA 88 (3V Sigma, CAS# 136504-96-6), GOODRITE UV-3034 (BF Goodrich Chemical Co., CAS# 71029-16-8), GOODRITE UV-3150 (BF Goodrich Chemical Co., CAS# 96204-36-3), GOODRITE UV-3159 (BF Goodrich Chemical Co., CAS# 130277-45-1), SANDUVOR 3050 (Clariant Corp., CAS# 85099-51-0), SANDUVOR PR-31 (Clariant Corp., CAS# 147783-69-5), UV CHECK AM806 (Ferro Corp., CAS# 154636-12-1), SUMISORB TM-061(Sumitomo Chemical Company, CAS# 84214-94-8), SUMISORB LS-060 (Sumitomo Chemical Company, CAS# 99473-08-2), UVASIL 299 LM (Great Lakes Chemical Corp., CAS# 164648-93-5), UVASIL 299 HM (Great Lakes Chemical Corp., CAS# 164648-93-5), and NYLOSTAB SEED (Clariant Corp., CAS# 42774-15-2). Additional hindered amine light stabilizer may be listed in the Plastic Additives Handbook 5th Edition, Hanser Gardner Publications, Inc., Cincinnati, OH, 2001.

Examples of phosphites include, but are not limited to, compounds sold under the following brand names: IRGAFOS TNPP (Ciba Specialty Chemicals, CAS# 26523-78-4), IRGAFOS 168 (Ciba Specialty Chemicals, CAS# 31570-04-4), ULTRANOX 626 (GE Specialty Chemicals, CAS# 26741-53-7), MARK PEP 36 (Asahi Denka Co., Ltd., CAS#80693-00-1), MARK HP-10 (Asahi Denka Co., Ltd., CAS# 140221-14-3), IRGAFOS P-EPQ (Ciba Specialty Chemicals, CAS# 38613-77-3), SANDOSTAB P-EPQ (Clariant Corp., CAS# 119345-01-6), ETHANOX 398 (Albemarle Corp., CAS# 118337-09-0), WESTON 618 (GE Specialty Chemicals, CAS# 3806-34-6), IRGAFOS 12 (Ciba Specialty Chemicals, CAS# 80410-33-9), IRGAFOS 38 (Ciba Specialty Chemicals, CAS# 145650-60-8), ULTRANOX 641 (GE Specialty Chemicals, CAS# 161717-32-4), DOVERPHOS S-9228 (Dover Chemical Corp. CAS# 154862-43-8), and the like.

As mentioned above, the additive can be employed in a coating so as to improve the coating's properties when being applied to a substrate and upon drying. Substrates that can be used in the present invention are any substrates known in the industry to which a coating can be applied such as wood, paper, polyester films such as polyethylene and polypropylene, metals such as aluminum and steel, glass, urethane elastomers, primed (painted) substrates, and the like.

In one embodiment, the coating composition, when being applied to a substrate, can have improved properties including, but not limited to, wiped wet edge time, open time, block resistance, gloss, scrub resistance, tack-free time, dry-to-touch time, and yellowing.

As used herein, the term "wiped wet edge time" is defined as the period of time that the edge region of an applied coating remains workable after it has been applied to a substrate. For example, during this period of time, re-brushing or application of more coating over the edge region of a freshly coated wet substrate is possible without causing defects, such as lap lines, in the final dried coating. Wiped wet edge time is determined in accordance with the description provided below in the Test Methods section of the Examples. In one embodiment of the present invention, the coating composition can have a wiped wet edge time of at least about 1.5 minutes, at least about 3 minutes, or at least 5 minutes.

As used herein, the term "open time" is defined as the period of time that the main area (the bulk) of an applied coating remains workable after it has been applied to a substrate. For example, during this period of time, re-brushing or application of more coating over the main area of a freshly coated wet substrate is possible without causing defects, such as brush marks, in the final dried coating. Open time is determined in accordance with the description provided below in the Test Methods section of the Examples. In one embodiment of the present invention, the coating composition can have an open time of at least about 2 minutes, at least about 5 minutes, or at least 8 minutes.

As used herein, the term "block resistance" is defined as the capability of a coating, when applied to two facing surfaces, not to stick to itself upon contact when pressure is applied, such as, for example, when coating a door and a door jamb. Block resistance is measured on a scale of 0 to 10, with 10 being the best (i.e., the coating shows no signs of sticking to itself). Block resistance can be measured after a certain time interval, typically measured in days. Block resistance is determined according to ASTM Method D4946-89. In one embodiment of the present invention, the coating composition can have a 7 day block resistance of at least about 3, or at least 6.

As used herein, the term "gloss" is defined as the relative amount and nature of mirror like (specular) reflection of a coated substrate. Typically, gloss is measured at angles of 20° and 60°. When measured at 20°, a value of greater than 40 is typically considered by those in the industry to be high gloss. When measured at 60°, a value of greater than 85 is generally considered by those in the industry to be high gloss. Gloss is detennined according to ASTM Method D-523-89. In one embodiment of the present invention, the coating composition can have a gloss at 20° of at least about 40, at least about 50, or at least 60. In another embodiment, the coating composition can have a gloss at 60° of at least about 60, at least about 70, or at least 80.

As used herein, the term "scrub resistance" is defined as the number of scrub cycles required to erode a coating to the substrate. Scrub resistance is determined according to ASTM Method D-2486. In one embodiment of the present invention, the coating composition can have a scrub resistance of at least about 500 cycles, at least about 700 cycles, or at least 1,000 cycles.

As used herein, the term "tack-free time" is defined as the amount of time that elapses between the time a coating is applied to a substrate and the time when there is no evidence that the coating is tacky to the touch. Tack-free time is determined in accordance with the description provided below in the Test Methods section of the Examples. In one embodiment of the present invention, the coating composition can have a tack-free time of less than about 2 weeks, less than about 1 week, or less than 3 days.

As used herein, the terms "yellowing" and/or "Δb" are defined as the amount of color variation in a coating as determined by ASTM Method D2244-05. In one embodiment of the present invention, the coating composition can have a Δb value of less than about 4 units, in the range of from about -2 to about 2 units, in the range of from about -1 to about 1 unit, or in the range of from -0.5 to 0.5 units.

As used herein, the term "dry-to-touch time" is defined as the amount of time that elapses between the time a coating is applied to a substrate and the time when no paint transfers to human skin when touched anywhere on the coated portion of the substrate. Dry-to-touch time is determined in accordance with the description provided below in the Test Methods section of the Examples. In one embodiment of the present invention, the coating composition can have a dry-to-touch time of less than about 60 minutes, less than about 50 minutes, or less than 40 minutes.

### EXAMPLES

The following examples are intended to be illustrative of the present invention in order to teach one of ordinary skill in the art to make and use the invention and are not intended to limit the scope of the invention in any way.

### Test Methods

### Wiped Wet Edge Test

A LENETA opacity chart, form N-2C (The Leneta Company, 15 Whitney Road, Mahwah, New Jersey, 07430) was coated with SHERWIN WILLIAMS A-100 LATEX WOOD PRIMER using a paint brush. The panels were dried and stored at 50 percent relative humidity and 70° F for at least seven days. A paint drawdown is applied to the primed substrate using a 3 mil bird type film applicator (Paul N. Gardner Company, Inc., 316 Northeast First Street, Pompano Beach, Florida, 33060). A stop watch is started when the paint drawdown is applied to the substrate. Wet paint is placed at the side of the drawdown at specified time intervals, usually every 1 to 2 minutes. A natural hair paint brush is wet with water. Excess water is removed by squeezing the brush between several layers of paper towel. The brush is used to spread the wet paint that was placed at the side of the drawdown across the drawdown. The paint is brushed back and forth for 20 cycles. The excess paint is wiped away gently with a paper tissue. This process is continued until an edge is left after wiping on the left side of the drawdown. The wet edge time is judged to be the time interval just before the edge is observed.

### Open Time Test

A paint drawdown is applied to a LENETA plain black chart, form 125 BH (The Leneta Company, 15 Whitney Road, Mahwah, New Jersey, 07430) using a 3 mil bird type film applicator (Paul N. Gardner Company, Inc., 316 Northeast First Street, Pompano Beach, Florida, 33060). A stop watch is started when the paint drawdown is applied to the substrate. Starting at the top of the drawdown, the wet paint is scored three times side by side in the center of the drawdown using a tongue depressor. This process is repeated every two to three inches to the bottom of the drawdown. At specified time intervals, usually every 1 to 2 minutes, paint is applied across one set of the scored lines for 4 cycles using a paint brush. The open time is judged to be the last time interval at which the lines were not visible after drying.

### VOC Testing

Volatile organic compounds (VOC) testing was carried out in accordance with EPA Reference Method 24 (ASTM D3960). Small (~ 0.5 gram) samples of each material to be tested were measured into a pre-weighed aluminum pan. The aluminum pan was then placed in a forced air oven for 60 minutes at 110°C. The percentage of material that was lost during this test is deemed to be volatile. Next, the amount of water and exempt solvents is determined under Method 24 and subtracted from the total amount of volatiles to determine the amount of VOC in the sample.

### Tack Free Time

A paint drawdown is applied to a LENETA opacity chart, form N-2C (The Leneta Company, 15 Whitney Road, Mahwah, New Jersey, 07430) using a 3 mil bird type film applicator (Paul N. Gardner Company, Inc., 316 North East First Street, Pompano Beach, Florida, 33060). The paint is allowed to dry to the touch over the entire panel. Heavy hand pressure is applied to the center of the drawdown for 5 seconds. This procedure is repeated until there is no evidence that the panel sticks to the hand when pressure is removed, at which point in time the panel is considered tack free.

### Heated Block Test

The block resistance was determined using ASTM Method D 4946-89. Paint is applied to a LENETA opacity chart, form N-2C (The Leneta Company, 15 Whitney Road, Mahwah, New Jersey, 07430) using a 3 mil bird type film applicator (Paul N. Gardner Company, Inc., 316 North East First Street, Pompano Beach, Florida, 33060). The panel is dried and stored at 50 percent relative humidity and 70°F. At a specified time, three 1.5 by 1.5 inch squares are cut from the test panel. The test panel is placed in a 50°C oven. The painted side of each square is placed onto the painted face of the test panel. A #8 rubber stopper is placed on each square, and then a 1000g weight is placed on top of the stopper. Both weights and stoppers have been previously heated to 50°C. The sample is left undisturbed for 30 minutes, and then the weight and stopper are removed. The sample is allowed to cool at 50 percent relative humidity and 70°F for 30 minutes. The squares are then separated. Each sample is then rated according to the scale given below:

**Table 1 - Block Resistance Rating**

| **NUMERICAL RATING** | **TYPE OF SEPARATION** | **PERFORMANCE** |
|---|---|---|
| 10 | No tack | Perfect |
| 9 | Trace tack | Excellent |
| 8 | Very slight tack | Very good |
| 7 | Very slight to slight tack | Good to very good |
| 6 | Slight tack | Good |
| 5 | Moderate tack | Fair |
| 4 | Very tacky; no seal | Poor to fair |
| 3 | 5 to 25% seal | Poor |
| 2 | 25 to 50% seal | Poor |
| 1 | 50 to 75% seal | Very poor |
| 0 | 75 to 100% seal | Very Poor |

### Gloss Test

Gloss tests are carried out in accordance with ASTM Method D523-89 entitled *Standard Test Method for Specular Gloss.* Paint is applied to a LENETA opacity chart, form N-2C (The Leneta Company, 15 Whitney Road, Mahwah, New Jersey, 07430) using a 3 mil bird type film applicator (Paul N. Gardner Company, Inc., 316 North East First Street, Pompano Beach, Florida, 33060). The panel is dried and stored at 50 percent relative humidity and 70°F. After 7 days, the gloss is measured at an angle of 20°, 60°, and 85° using a DR LANGE reflectometer, model LMG 070, available from INXS Inc., 1220 Tangelo Terrace, Suite A21, Delray Beach, FL 33444. An average of three readings is reported.

### Scrub Resistance Test

Scrub Resistance testing was done using ASTM Method D 2486-00 entitled *Standard Test Methods for Scrub Resistance of Wall Paints.*

### Viscosity Testing

The viscosity of the paints was measured using a STORMER viscometer (ASTM Method D-562-01, Method B) and an ICI cone and plate viscometer (ASTM Method D4287-00). Both instruments are available from Paul N. Gardner Company, Inc., 316 North East First Street, Pompano Beach, Florida, 33060.

### Water Resistance Test

Paint is applied to a LENETA opacity chart, form N-2C (The Leneta Company, 15 Whitney Road, Mahwah, New Jersey, 07430) using a 3 mil bird type film applicator (Paul N. Gardner Company, Inc., 316 North East First Street, Pompano Beach, Florida, 33060). The panel is dried and stored at 50 percent relative humidity and 70°F. After 7 days, three drops of distilled water are placed on the surface of the coating. Each drop is covered with a watch glass for a given period of time. The drop is wiped gently away with a tissue. The impact of the water drop is judged as to amount of film removed or damaged, degree of whitening, blisters, and loss of adhesion and gloss. The panel is judged again after 24 hours recovery time.

Water Resistance Rating Scale:
5 is no change
4 is very slight change (approximately 10% change)
3 is significant change (approximately 50% change)
0 is complete destruction(approximately 100% change)

Rating can be in reported in increments of 0.1.

### Yellowing (Δb)

The yellowing of the coating was measured according to ASTM Method D2244-05. The instrument used was a MINOLTA spectrophotometer, model CM-508d (Konica Minolta Sensing Americas, Inc., 101 Williams Drive Ramsey, NJ 07446).

### Dry-to-Touch Time Test

Paint is applied to a LENETA opacity chart, form N-2C (The Leneta Company, 15 Whitney Road, Mahwah, New Jersey, 07430) using a 3 mil bird type film applicator (Paul N. Gardner Company, Inc., 316 North East First Street, Pompano Beach, Florida, 33060). The dry to touch time is the time it takes from application of the paint to the time when no paint transfers from anywhere on the panel to the finger when the panel is touched.

### EXAMPLE 1 - Preparation of Water-dispersible Rosin

The following ingredients were placed in a quart wide-mouthed jar:
- 100.0 g FORAL AX-E Fully Hydrogenated Rosin (Eastman Chemical Company, Kingsport, Tennessee),
- 37.0 g Ammonium Hydroxide (30% NH₃ in water), and
- 263.0 g Demineralized Water

The above mixture was rolled for 24 hours.

### EXAMPLE 2 - Preparation of Water-dispersible Polymer

The following ingredients were placed in a quart wide-mouthed jar:
- 150.0 g JONCRYL 67 Resin (BASF Corporation)
- 46.7 g Ammonium Hydroxide (30% NH₃ in water), and
- 403.3 g Demineralized Water

The above mixture was rolled for 24 hours.

### EXAMPLE 3 - Preparation of Sulfopolymer Dispersions

While continuously stirring, 64 g of EASTMAN AQ48 polymer (Eastman Chemical Company, Kingsport, Tennessee) was added to 136 g of water in a beaker. The beaker was covered, and then the mixture was heated to 80° C for 30 minutes. The weight of water lost was replaced upon cooling.

### EXAMPLE 4 - Preparation of Amphiphilic Sulfopolyester

### Preparation of an NPG/SIP Adduct

827.0 g (7.95 mole) of neopentyl glycol (NPG), 535.6 g (2.00 mole) of 5-SSIPA, 1.1 g of FASCAT 4100 (an acid catalyst available from Arkema, Inc.), and 91.9 g of water were charged to a 3-L three-neck, round-bottom flask equipped with a mechanical stirrer, a steam-jacketed partial condenser, a Dean-Stark trap, a water condenser, and a nitrogen inlet. The mixture was allowed to react at 140-190° C and the distillate collected. The reaction was continued until an acid number of 2 mg KOH/g was obtained. The resulting adduct was cooled to 80° C and water added to yield an adduct having 90% solids.

### Preparation of Sulfopolyester

26.53 g (0.20 mole) of pentaerythritol, 102.00 g (0.51 mole) of polyethylene glycol (average molecular weight 200), 41.00 g of the NPG/SIP adduct prepared above (90% in water), 101.91 g (0.59 mole) of 1,4-cyclohexane dicarboxylic acid, 58.09 g (0.37 mole) of C-810L fatty acid (hexanoic, octanoic, and dodecanoic acid blend available from Procter & Gamble Chemicals), and 0.34 g of FASCAT 4100 were charged to a 500 mL three-neck, round-bottom flask equipped with a mechanical stirrer, a steam-jacketed partial condenser, a Dean-Stark trap, a water condenser, and a nitrogen inlet. The reaction temperature was gradually raised to 190° C in 30 minutes and the water distillate collected (10 mL). The reaction was allowed to continue at 190° C for one hour and at 220° C for three hours until 32 mL of the condensate was collected. The resulting viscous resin was allowed to cool to 80° C and isolated. The number average molecular weight of the resin was determined to be 1,095, the weight average molecular weight was determined to be 2,492, and the glass transition temperature was determined to be -45 °C.

### EXAMPLE 5 - Preparation of the Master Batch Base for Paints

The following ingredients were mixed together in the order listed in Table 2 using a high speed disperser equipped with a saw-toothed blade. The resulting mixture was placed in quart glass bottles. The bottles were placed on slow speed rollers until used.

**Table 2 - Preparation of Master Batch Base for Paints**

| **INGREDIENT NAME** | **SUPPLIER** | **WEIGHT (Ib)** | **CONCENTRATION (wt. %)** |
|---|---|---|---|
| TI-PURE R-746 Slurry | DuPont | 15.510 | 44.10 |
| KATHON LX, 1.5% | Rohm and Haas Company | 0.086 | 0.24 |
| RHOPLEX SG-30 | Rohm and Haas Company | 19.280 | 54.82 |
| Aerosol OT-75 | Cytec Industries Inc. | 0.071 | 0.20 |
| BYK-022 | BYK-Chemie | 0.100 | 0.28 |
| Ammonium Hydroxide | Sigma-Aldrich Corporation | 0.050 | 0.14 |
| FLEXIVERSE Blue BFD-1121 | Sun Chemical | 0.070 | 0.20 |
| **Total** | | **35.167** | **100.00** |

### EXAMPLE 6 - Preparation of Paint Formulations

Water-dispersible rosin, as prepared in example 1, water-dispersible polymer, as prepared in example 2, and MILSTAT N-20, a commercial surfactant available from ICI Americas, were respectively added to a portion of the master batch, as prepared in example 5, along with the additional ingredients listed below in Table 3, to form three individual paint formulations. The additive in each formulation was calculated to be 5% active solids based on the total weight of the paint formulation (including water). Following preparation, the pigment volume concentration (PVC), pigment/binder, percent binder solids, and VOC content was determined for each formulation.

**Table 3 - Preparation and Properties of Individual Additive Formulations**

| | **JONCRYL 67,25% FORMULATION** | **FORAL AX-E, 25% FORMULATION** | **MILSTAT N-20 FORMULATION** |
|---|---|---|---|
| Master Batch (g) | 559.30 | 559.30 | 559.30 |
| JONCRYL 67 (g) | 160.00 | 0.00 | 0.00 |
| FORAL AX-E (g) | 0.00 | 160.00 | 0.00 |
| MILSTAT N-20 (g) | 0.00 | 0.00 | 40.00 |
| RHOPLEX SG-30 (g) | 0.00 | 0.00 | 80.00 |
| Water (g) | 56.70 | 86.06 | 88.80 |
| ACRYSOL SCT-275 (g) | 15.77 | 0.00 | 17.90 |
| ACRYSOL RM-2020 NPR (g) | 32.53 | 0.00 | 16.22 |
| Total (g) | 824.30 | 805.36 | 802.22 |

| **Properties:** | | | |
|---|---|---|---|
| PVC | 21.85 | 22.62 | 21.19 |
| Piginent/Binder | 0.91 | 0.95 | 0.93 |
| Binder Solids (%) | 24.89 | 24.33 | 25.13 |
| VOC (g/L) | 15.4 | 0.6 | 27.2 |

### EXAMPLE 7 - Analysis of Mixed Formulations

Portions of the formulations prepared in Example 6 were mixed together along with various amounts of TEXANOL ester alcohol (Eastman Chemical Company) according to Table 4, below.

**Table 4 - Preparation of Mixed Formulations**

| **SAMPLE NUMBER** | **JONCRYL 67, 25% FORMULATION (g)** | **FORAL AX-E, 25% FORMULATION (g)** | **MILSTAT N-20 FORMULATION (g)** | **TEXANOL (g)** |
|---|---|---|---|---|
| 1 | 0-00 | 100.00 | 0.00 | 1.10 |
| 2 | 0.00 | 100.00 | 0.00 | 1.10 |
| 3 | 16.67 | 66.67 | 16.67 | 0.28 |
| 4 | 16.67 | 16.67 | 66.67 | 0.28 |
| 5 | 0.00 | 100.00 | 0.00 | 0.00 |
| 6 | 50.00 | 0.00 | 50.00 | 0.00 |
| 7 | 0.00 | 0.00 | 100.00 | 1.10 |
| 8 | 0.00 | 50.00 | 50.00 | 0.00 |
| 9 | 100.00 | 0.00 | 0.00 | 0.55 |
| 10 | 66.67 | 16.67 | 16.67 | 0.83 |
| 11 | 0.00 | 0.00 | 100.00 | 0.00 |
| 12 | 50.00 | 50.00 | 0.00 | 0.55 |
| 13 | 0.00 | 50.00 | 50.00 | 0.55 |
| 14 | 100.00 | 0.00 | 0.00 | 0.00 |
| 15 | 0.00 | 0.00 | 100.00 | 1.10 |
| 16 | 0.00 | 100.00 | 0.00 | 0.55 |
| 17 | 50.00 | 0.00 | 50.00 | 0.55 |
| 18 | 50.00 | 50.00 | 0.00 | 1.10 |
| 19 | 100.00 | 0.00 | 0.00 | 0.00 |
| 20 | 100.00 | 0.00 | 0.00 | 1.10 |
| 21 | 0.00 | 0.00 | 100.00 | 0.00 |
| 22 | 16.67 | 66.67 | 16.67 | 0.83 |
| 23 | 50.00 | 0.00 | 50.00 | 1.10 |
| 24 | 50.00 | 50.00 | 0.00 | 0.00 |
| 25 | 100.00 | 0.00 | 0.00 | 1.10 |
| 26 | 0.00 | 0.00 | 100.00 | 0.55 |
| 27 | 66.67 | 16.67 | 16.67 | 0.28 |
| 28 | 0.00 | 50.00 | 50.00 | 1.10 |

The resulting sample mixtures from Table 4 were then analyzed according to the above described test methods for wiped wet edge time, 1 day blocking, 7 day blocking, gloss at 20 and 60 degrees, scrub resistance, and yellowing. The results are listed in Table 5 below.

**Table 5 - Analysis of Mixed Formulations**

| **SAMPLE NO.** | **WIPED WET EDGE TIME (min.)** | **HEATED BLOCK (1 day)** | **HEATED BLOCK (7 days)** | **GLOSS (20°)** | **GLOSS (60°)** | **SCRUB RESISTANCE (cycles)** | **YELLOWING (**Δ**b)** |
|---|---|---|---|---|---|---|---|
| 1 | 4 | 0 | 9 | 54.4 | 72.8 | 1,986 | 2.13 |
| 2 | 2 | 6 | 9 | 54.7 | 72.6 | 1,950 | 2.23 |
| 3 | 4 | 0 | 9 | 57.7 | 75.3 | 1,885 | 1.28 |
| 4 | 10 | 3 | 9 | 68.1 | 84.4 | 1,676 | 1.09 |
| 5 | 5 | 0 | 9 | 55.6 | 73.4 | 1,982 | 2.25 |
| 6 | 24 | 3 | 8 | 44.8 | 75.5 | 200 | -0.40 |
| 7 | 2 | 3 | 3 | 56.6 | 81.6 | 1,676 | 1.86 |
| 8 | 3 | 0 | 8 | 63.9 | 79.4 | 1,750 | 1.39 |
| 9 | 18 | 0 | 1 | 47.6 | 78.0 | 619 | -0.61 |
| 10 | 8 | 6 | 9 | 65.5 | 81.6 | 1,560 | -0.27 |
| 11 | 3 | 0 | 0 | 44.0 | 84.1 | 958 | 1.64 |
| 12 | 9 | 8 | 9 | 49.0 | 77.5 | 1,420 | 0.57 |
| 13 | 4 | 3 | 8 | 57.2 | 79.0 | 2,200 | 1.22 |
| 14 | 14 | 0 | 1 | 45.2 | 75.9 | 425 | -0.49 |
| 15 | 2 | 3 | 2 | 64.7 | 84.5 | 1,650 | 2.04 |
| 16 | 4 | 0 | 9 | 54.0 | 73.1 | 2,100 | 2.29 |
| 17 | 20 | 0 | 6 | 56.1 | 79.3 | 1,200 | 1.02 |
| 18 | 5 | 8 | 8 | 40.3 | 75.8 | 1,367 | 0.42 |
| 19 | 21 | 0 | 0 | 47.2 | 77.0 | 285 | -0.43 |
| 20 | 19 | 0 | 0 | 50.4 | 77.7 | 1,040 | -0.36 |
| 21 | 2 | 0 | 0 | 67.4 | 85.5 | 902 | 1.55 |
| 22 | 2 | 0 | 9 | 59.6 | 74.9 | 1,900 | 1.14 |
| 23 | 15 | 0 | 5 | 52.7 | 78.7 | 1,630 | 1.23 |
| 24 | 9 | 8 | 9 | 51.7 | 77.9 | 700 | 0.52 |
| 25 | 22 | 0 | 0 | 44.0 | 78.2 | 1,035 | -0.43 |
| 26 | 3 | 2 | 3 | 57.5 | 84.8 | 1,410 | 1.67 |
| 27 | 9 | 6 | 8 | 57.8 | 81.4 | 1,000 | -0.03 |
| 28 | 3 | 0 | 8 | 62.1 | 79.4 | 2,000 | 1.41 |

The test results summarized in Table 5 demonstrate that certain properties of the coating are improved when the JONCRYL 67, 25% formulation, the FORAL AX-E, 25% formulation, and the MILSTAT N-20 formulation are each present in the coating. For example, Sample Number 10, which contains 66.67 g, 16.67 g, and 16.67 g of the above three additives respectively, all of the properties tested show an acceptable level of performance. Additionally, Sample Numbers 4, 12, and 27 each display a good balance of the properties sought to be improved by the present invention.

### NUMERICAL RANGES

The present description uses numerical ranges to quantify certain parameters relating to the invention. It should be understood that when numerical ranges are provided, such ranges are to be construed as providing literal support for claim limitations that only recite the lower value of the range as well as claims limitation that only recite the upper value of the range. For example, a disclosed numerical range of 10 to 100 provides literal support for a claim reciting "greater than 10" (with no upper bounds) and a claim reciting "less than 100" (with no lower bounds).

The present description uses specific numerical values to quantify certain parameters relating to the invention, where the specific numerical values are not expressly part of a numerical range. It should be understood that each specific numerical value provided herein is to be construed as providing literal support for a broad, intermediate, and narrow range. The broad range associated with each specific numerical value is the numerical value plus and minus 60 percent of the numerical value, rounded to two significant digits. The intermediate range associated with each specific numerical value is the numerical value plus and minus 30 percent of the numerical value, rounded to two significant digits. The narrow range associated with each specific numerical value is the numerical value plus and minus 15 percent of the numerical value, rounded to two significant digits. For example, if the specification describes a specific temperature of 62°F, such a description provides literal support for a broad numerical range of 25°F to 99°F (62°F +/- 37°F), an intermediate numerical range of 43°F to 81°F (62°F +/- 19°F), and a narrow numerical range of 53°F to 71°F (62°F +/- 9°F). These broad, intermediate, and narrow numerical ranges should be applied not only to the specific values, but should also be applied to differences between these specific values. Thus, if the specification describes a first pressure of 110 psia and a second pressure of 48 psia (a difference of 62 psi), the broad, intermediate, and narrow ranges for the pressure difference between these two streams would be 25 to 99 psi, 43 to 81 psi, and 53 to 71 psi, respectively.

### DEFINITIONS

As used herein, the terms "a," "an," "the," and "said" means one or more.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

As used herein, the term "amphiphilic" refers to a material that has both hydrophilic and hydrophobic properties.

As used herein, the terms "comprising," "comprises," and "comprise" are open-ended transition terms used to transition from a subject recited before the term to one or more elements recited after the term, where the element or elements listed after the transition term are not necessarily the only elements that make up the subject.

As used herein, the terms "containing," "contains," and "contain" have the same open-ended meaning as "comprising," "comprises," and "comprise."

As used herein, the term "glass transition temperature" or "Tg" refers to the temperature below which the polymer becomes rigid and brittle, and can crack and shatter under stress.

As used herein, the terms "having," "has," and "have" have the same open-ended meaning as "comprising," "comprises," and "comprise."

As used herein, the terms "including," "includes," and "include" have the same open-ended meaning as "comprising," "comprises," and "comprise."

As used herein, the term "polyol" refers to a chemical compound with at least two hydroxyl functional groups.

As used herein, the term "salt" refers to a compound comprising a positive ion and a negative ion, wherein the compound retains overall charge neutrality.

As used herein, the term "water" refers to deionized water, tap water, and any mixture thereof.

As used herein, the term "water-dispersible" refers to the property of a substance that allows it to be dispersible in a liquid comprising a polar material, such as, for example, water.

## Claims

1. A coating comprising: water; a binder; and an additive, wherein said additive comprises (a) a water-dispersible rosin and (b) a water-dispersible polymer having a Tg in the range of from 20 to 160 °C, wherein said additive has a VOC content of less than 20 weight percent as determined in accordance with Environmental Protection Agency Reference Method 24, which is equivalent to ASTM D3960,
wherein said water-dispersible rosin is a salt of a rosin acid; and wherein said water-dispersible polymer comprises a neutralized vinyl polymer and/or a sulfopolymer.

2. The coating of claim 1, wherein said additive further comprises an amphiphilic component.

3. The coating of claim 2, wherein said additive comprises in the range of from 20 to 75 weight percent of said water-dispersible rosin based on the total weight of solids in said additive, in the range of from 20 to 75 weight percent of said water-dispersible polymer based on the total weight of solids in said additive, and in the range of from 5 to 60 weight percent of said amphiphilic component based on the total weight of solids in said additive.

4. The coating of claim 1, wherein said neutralized vinyl polymer comprises the residue of at least one monomer having a carboxylic acid end group and/or an anhydride end group.

5. The coating of claim 1, wherein said sulfopolymer has a Tg of at least 25 °C.

6. The coating of claim 1, wherein said sulfopolymer comprises the residue of a sulfomonomer having at least one metal sulfonate moiety.

7. The coating of claim 1, wherein said amphiphilic component comprises a surfactant and/or an amphiphilic polyester.

8. The coating of claim 1, wherein said coating comprises in the range of from 20 to 90 weight percent of said water.

9. The coating of claim 1, wherein said coating comprises a cumulative concentration of said binder and said additive in the range of from 10 to 80 weight percent based on the total weight of said coating.

10. The coating of claim 1, wherein said binder comprises a film-forming latex polymer, wherein said film-forming latex polymer has a Tg of -5 to 80 °C.

11. The coating of claim 10, wherein said coating comprises in the range of from 70 to 97 weight percent of said film-forming latex polymer and in the range of from 3 to 30 weight percent of said additive, wherein each weight percent is based on the total weight of the solids in said latex polymer and said additive.

## Patentansprüche

1. Beschichtung, aufweisend: Wasser; ein Bindemittel; und ein Additiv, wobei besagtes Additiv aufweist (a) ein Wasser-dispergierbares Harz und (b) ein Wasser-dispergierbares Polymer mit einem Tg im Bereich von 20 bis 160 °C, wobei besagtes Additiv einen VOC-Gehalt von weniger als 20 Gewichtsprozent aufweist wie bestimmt nach Environmental Protection Agency Reference Method 24, welche äquivalent ist zu ASTM D3960, wobei besagtes Wasser-dispergierbares Harz ein Salz einer Harzsäure ist; und wobei besagtes Wasser-dispergierbares Polymer ein neutralisiertes Vinylpolymer und/oder ein Sulfopolymer aufweist.

2. Beschichtung nach Anspruch 1, wobei besagtes Additiv weiter eine amphiphile Komponente aufweist.

3. Beschichtung nach Anspruch 2, wobei besagtes Additiv besagtes Wasser-dispergierbares Harz im Bereich von 20 bis 75 Gewichtsprozent aufweist bezogen auf das Gesamtgewicht an Feststoffen in besagtem Additiv, besagtes Wasser-dispergierbares Polymer im Bereich von 20 bis 75 Gewichtsprozent aufweist bezogen auf das Gesamtgewicht an Feststoffen in besagtem Additiv, und besagte amphiphile Komponente im Bereich von 5 bis 60 Gewichtsprozent aufweist bezogen auf das Gesamtgewicht an Feststoffen in besagtem Additiv.

4. Beschichtung nach Anspruch 1, wobei besagtes neutralisiertes Vinylpolymer den Rest mindestens eines Monomers aufweist, welches eine Carbonsäure-Endgruppe aufweist und/oder eine Anhydrid-Endgruppe.

5. Beschichtung nach Anspruch 1, wobei besagtes Sulfopolymer eine Tg von mindestens 25 °C aufweist.

6. Beschichtung nach Anspruch 1, wobei besagtes Sulfopolymer den Rest eines Sulfomonomers aufweist, welcher mindestens eine Metallsulfonat-Einheit aufweist.

7. Beschichtung nach Anspruch 1, wobei besagte amphiphile Komponente ein oberflächenaktives Mittel und/oder einen amphiphilen Polyester aufweist.

8. Beschichtung nach Anspruch 1, wobei besagte Beschichtung Wasser im Bereich von 20 bis 90 Gewichtsprozent aufweist.

9. Beschichtung nach Anspruch 1, wobei besagte Beschichtung eine kumulative Konzentration des besagten Bindemittels und des besagten Additivs im Bereich von 10 bis 80 Gewichtsprozent aufweist bezogen auf das Gesamtgewicht der besagten Beschichtung.

10. Beschichtung nach Anspruch 1, wobei besagtes Bindemittel ein Film-bildendes Latexpolymer aufweist, wobei besagtes Film-bildendes Latexpolymer eine Tg von -5 bis 80 °C aufweist.

11. Beschichtung nach Anspruch 10, wobei besagte Beschichtung besagtes Film-bildendes Latexpolymer im Bereich von 70 bis 97 Gewichtsprozent und besagtes Additiv im Bereich von 3 bis 30 Gewichtsprozent aufweist, wobei jedes Gewichtsprozent bezogen ist auf das Gesamtgewicht an Feststoffen in besagtem Latexpolymer und besagtem Additiv.

## Revendications

1. Revêtement comprenant : de l'eau ; un liant ; et un additif, dans lequel ledit additif comprend (a) une colophane dispersible dans l'eau et (b) un polymère dispersible dans l'eau présentant une Tg dans l'intervalle de 20 à 160°C, dans lequel ledit additif présente une teneur en VOC inférieure à 20 pourcents en masse comme déterminée selon le procédé Environmental Protection Agency Reference Method 24, lequel est équivalent à ASTM D3960,
dans lequel ladite colophane dispersible dans l'eau est un sel d'un acide résinique ; et dans lequel ledit polymère dispersible dans l'eau comprend un polymère vinylique neutralisé et/ou un sulfopolymère.

2. Revêtement selon la revendication 1, dans lequel ledit additif comprend de plus un constituant amphiphile.

3. Revêtement selon la revendication 2, dans lequel ledit additif comprend dans l'intervalle de 20 à 75 pourcents en masse de ladite colophane dispersible dans l'eau rapportée à la masse totale des matières solides dans ledit additif, dans l'intervalle de 20 à 75 pourcents en masse dudit polymère dispersible dans l'eau rapporté à la masse totale des matières solides dans ledit additif, et dans l'intervalle de 5 à 60 pourcents en masse dudit constituant amphiphile rapporté à la masse totale des matières solides dans ledit additif.

4. Revêtement selon la revendication 1, dans lequel ledit polymère vinylique neutralisé comprend le résidu d'au moins un monomère présentant un groupe terminal d'acide carboxylique et/ou un groupe terminal d'anhydride.

5. Revêtement selon la revendication 1, dans lequel ledit sulfopolymère présente une Tg d'au moins 25°C.

6. Revêtement selon la revendication 1, dans lequel ledit sulfopolymère comprend le résidu d'un sulfomonomère présentant au moins une moitié sulfonate de métal.

7. Revêtement selon la revendication 1, dans lequel ledit constituant amphiphile comprend un tensioactif et/ou un polyester amphiphile.

8. Revêtement selon la revendication 1, dans lequel ledit revêtement comprend dans l'intervalle de 20 à 90 pourcents en masse de ladite eau.

9. Revêtement selon la revendication 1, dans lequel ledit revêtement comprend une concentration cumulée dudit liant et dudit additif dans l'intervalle de 10 à 80 pourcents en masse rapporté à la masse totale dudit revêtement.

10. Revêtement selon la revendication 1, dans lequel ledit liant comprend un polymère de latex formant un film, dans lequel ledit polymère de latex formant un film présente une Tg de -5 à 80°C.

11. Revêtement selon la revendication 10, dans lequel ledit revêtement comprend dans l'intervalle de 70 à 97 pourcents en masse dudit polymère de latex formant un film et dans l'intervalle de 3 à 30 pourcents en masse dudit additif, dans lequel chaque pourcent en masse est rapporté à la masse totale des matières solides dans ledit polymère de latex et ledit additif.
